# EUROPEAN PATENT APPLICATION

(11) **EP 4 694 418 A1**
(43) Date of publication of application: **11.02.2026**
(21) Application number: 23931399.2
(22) Date of filing: 06.04.2023
(51) Int. Cl.: H04W 64/00

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); SHI, Zhihua, Dongguan, Guangdong 523860 (CN)
(74) Representative: Wu, Ting
(86) International application number: PCT/CN2023/086647
(87) International publication number: WO 2024/207330

(57) **Abstract**

A wireless communication method, a terminal device and a network device. The method comprises: a terminal device sending at least one piece of first information to a network device, wherein the first information is parameter information related to a model function for positioning, which parameter information is supported by the terminal device; and the terminal device receiving first configuration information sent by the network device, wherein the first configuration information comprises configuration information related to the model function for positioning and/or configuration information related to a model for positioning.

## Description

### TECHNICAL FIELD

Embodiments of the present disclosure relate to the field of communications, and in particularly to, methods for wireless communication, a terminal device and a network device.

### BACKGROUND

In a New Radio (NR) system, it is considered that a location of a terminal device is estimated by using an Artificial Intelligence (AI) model or a Machine Learning (ML) model.

In some scenarios, it is considered that AI/ML function recognition and AI/ML model recognition are introduced into AI model-based positioning or ML model-based positioning. How to define the AI/ML function, the AI/ML model and relationship between the AI/ML function and the AI/ML model to implement the AI/ML model-based positioning is an urgent problem to be solved.

### SUMMARY

The present disclosure provides methods for wireless communication, a terminal device and a network device, which provide a definition of a model function for positioning, thereby realizing the model-based positioning.

In a first aspect, there is provided a method for wireless communication including that: a terminal device sends at least one first information to a network device, where the first information includes parameter information related to a model function for positioning supported by the terminal device; and the network device sends first configuration information to the terminal device, where the first configuration information includes: configuration information related to a model function for positioning and/or configuration information related to a model for positioning.

In a second aspect, there is provided a method for wireless communication including that: a network device receives at least one first information sent by a terminal device, where the first information is parameter information related to a model function for positioning supported by the terminal device; and the network device sends first configuration information to the terminal device, where the first configuration information includes: configuration information related to a model function for positioning and/or configuration information related to a model for positioning, and the first configuration information is determined according to the at least one first information.

In a third aspect, there is provided a terminal device configured to perform the method in the aforementioned first aspect or various implementations thereof.

Specifically, the terminal device includes fimctional modules configured to perform the method in the aforementioned first aspect or various implementations thereof.

In a fourth aspect, there is provided a network device configured to perform the method in the aforementioned second aspect or various implementations thereof.

Specifically, the network device includes functional modules configured to perform the method in the aforementioned second aspect or various implementations thereof.

In a fifth aspect, there is provided a terminal device including a processor and a memory. The memory is configured to store a computer program, and the processor is configured to invoke and execute the computer program stored in the memory to perform the method in the aforementioned first aspect or various implementations thereof.

In a sixth aspect, there is provided a network device including a processor and a memory. The memory is configured to store a computer program, and the processor is configured to invoke and execute the computer program stored in the memory to perform the method in the aforementioned second aspect or various implementations thereof.

In a seventh aspect, there is provided a chip configured to implement the method in any one of the aforementioned first aspect and the second aspect or various implementations thereof. Specifically, the chip includes a processor configured to invoke and execute a computer program from a memory, to enable a device on which the chip is mounted to perform the method in any one of the aforementioned first aspect and the second aspect or various implementations thereof.

In an eighth aspect, there is provided a computer-readable storage medium configured to store a computer program that causes a computer to perform the method in any one of the aforementioned first aspect and the second aspect or various implementations thereof.

In an ninth aspect, there is provided a computer program product including computer program instructions that cause a computer to perform the method in any one of the aforementioned first aspect and the second aspect or various implementations thereof.

In a tenth aspect, there is provided a computer program, the computer program, when running on a computer, causes the computer to perform the method in any one of the aforementioned first aspect and the second aspect or various implementations thereof.

According to the above technical scheme, the terminal device may send at least one first information to the network device, and the first information includes parameter information related to a model function for positioning supported by the terminal device. That is to say, the first information may determine the model function for positioning supported by the terminal device. Furthermore, the network device may send first configuration information to the terminal device, and the first configuration information includes: configuration information related to the model function for positioning and/or configuration information related to the model for positioning. That is to say, the first configuration information may be used to configure the model function for positioning and/or the model for positioning. In this way, the model-based positioning is realized.

### BRIEF DESCRIPTION OF THE DRAWINGS

FIG. 1 is a schematic diagram of an architecture of a communication system according to an embodiment of the present disclosure.
FIG. 2 is a schematic structural diagram of a neuron.
FIG. 3 is a schematic diagram of a neural network according to the present disclosure.
FIG. 4 is a schematic diagram of a convolutional neural network according to the present disclosure.
FIG. 5 is a schematic diagram of a Long Short-Term Memory (LSTM) unit according to the present disclosure.
FIG. 6 is a schematic diagram of a positioning method in the related art.
FIG. 7 is a schematic diagram of another positioning technology in the related art.
FIG. 8 is a schematic diagram of a scheme of model-based positioning.
FIG. 9 is a schematic interaction diagram of a method for wireless communication according to an embodiment of the present disclosure.
FIG. 10 is a schematic interaction diagram of another method for wireless communication according to an embodiment of the present disclosure.
FIG. 11 is a schematic interaction diagram of yet another method for wireless communication according to an embodiment of the present disclosure.
FIG. 12 is a schematic block diagram of a terminal device according to an embodiment of the present disclosure.
FIG. 13 is a schematic block diagram of a network device according to an embodiment of the present disclosure.
FIG. 14 is a schematic block diagram of a communication device according to an embodiment of the present disclosure.
FIG. 15 is a schematic block diagram of a chip according to an embodiment of the present disclosure.
FIG. 16 is a schematic block diagram of a communication system according to an embodiment of the present disclosure.

### DETAILED DESCRIPTION

The technical schemes of the embodiments of the present disclosure would be described in conjunction with the accompanying drawings in the embodiments of the present disclosure. It is apparent that the described embodiments are only part of, not all of the embodiments of the present disclosure. All other embodiments obtained by those of ordinary skill in the art with respect to the embodiments of the present disclosure without creative efforts shall fall within the scope of protection of the present disclosure.

The technical schemes in the embodiments of the present disclosure may be applied to various communication systems, such as: a Global System Of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system for NR system, a LTE-based access to Unlicensed Spectrum (LTE-U) system, a NR-based access to Unlicensed Spectrum (NR-U) system, a Non-Terrestrial Networks (NTN) system, a Universal Mobile Teleconununication System (UMTS), a Wireless Local Area Network (WLAN), a Wireless Fidelity (Wi-Fi), a 5th-generation (5G) system or other communication systems.

Generally speaking, traditional communication systems support a limited number of connections and are easy to implement. However, with the development of communication technology, mobile communication systems will not only support traditional communication, but also support, for example, Device to Device (D2D) communication, Machine To Machine (M2M) communication, Machine Type Communication (MTC), Vehicle To Vehicle (V2V) communication, or Vehicle to everything (V2X) communication, etc. The embodiments of the present disclosure may also be applied to these communication systems.

Optionally, the communication system in the embodiments of the present disclosure may be applied to a Carrier Aggregation (CA) scenario, a Dual Connectivity (DC) scenario, and a Standalone (SA) network distribution scenario.

Optionally, the communication system in the embodiments of the present disclosure may be applied to an unlicensed spectrum, and the unlicensed spectrum may also be considered as a shared spectrum. Optionally, the communication system in the embodiments of the present disclosure may also be applied to a licensed spectrum, and the licensed spectrum may also be considered as a non-shared spectrum.

The embodiments of the present disclosure are described in connection with a network device and a terminal device. The terminal device may also be referred to as User Equipment (UE), an access terminal, a user unit, a user station, a mobile station, a remote station, a remote terminal, a mobile device, a user terminal, a terminal, a wireless communication device, a user agent or a user device, etc.

The terminal device may be a Station (STA) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved Public Land Mobile Network (PLMN), etc.

In the embodiments of the present disclosure, the terminal device may be deployed on land, and include indoor or outdoor device, hand-held device, wearable device or vehicle-mounted device. The terminal device may also be deployed on the water (such as on the ships, etc.). The terminal device may also be deployed in the air (such as, in airplanes, in balloons and in satellites, etc.).

In the embodiments of the present disclosure, the terminal device may be a mobile phone, a Pad, a computer with wireless transceiver function, a Virtual Reality (VR) terminal device, an Augmented Reality (AR) terminal device, a wireless terminal device in the industrial control, a wireless terminal device in the self driving, a wireless terminal device in the remote medical, a wireless terminal device in the smart grid, a wireless terminal device in the transportation safety, a wireless terminal device in the smart city, or a wireless terminal device in the smart home, etc.

By way of example and not limitation, in the embodiments of the present disclosure, the terminal device may also be a wearable device. The wearable device may also be referred to as a wearable smart device, which is a general term of wearable devices that are intelligently designed and developed by applying wearable technology to daily wear, such as, glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. The generalized wearable smart device has full functions and a large size, and the generalized wearable smart device may realize complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

In the embodiments of the present disclosure, the network device may be a device configured to communicate with a mobile device, and the network device may be an access point (AP) in the WLAN, a Base Transceiver Station (BTS) in the GSM or CDMA, a NodeB (NB) in the WCDMA, an evolved Node B (eNB or eNodeB) in the LTE, a relay station or an access point, a vehicle-mounted device, a wearable device, a network device (or gNB) in the NR network, a network device in the future evolved PLMN network or a network device in the NTN network, etc.

By way of example and not limitation, in the embodiments of the present disclosure, the network device may have mobility characteristics, for example, the network device may be a mobile device. Optionally, the network device may be a satellite, a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and the like. Optionally, the network device may also be a base station located on land, water, etc.

In the embodiments of the present disclosure, the network device may provide services for a cell, and the terminal device communicates with the network device through transmission resources (e.g., frequency-domain resources, or spectrum resources) used by the cell. The cell may be a cell corresponding to the network device (e.g., base station), and the cell may belong to a macro base station or a base station corresponding to a small cell. The small cell may include a metro cell, a micro cell, a Pico cell, a Femto cell, etc. These small cells have characteristics of small coverage and low transmission power, and the small cells are suitable for providing high-speed data transmission services.

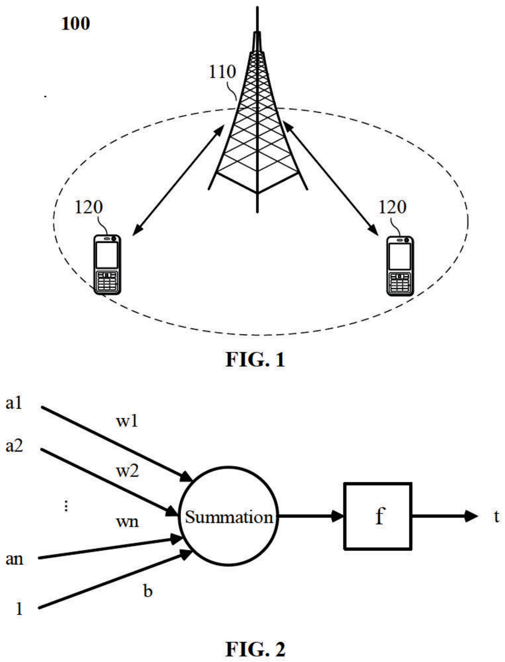

Exemplarily, FIG. 1 illustrates a communication system 100 to which the embodiments of the present disclosure are applied. The communication system 100 may include a network device(s) 110 and a terminal device(s) 120 (or referred to as a communication terminal, or a terminal) with communication function. The network device 110 may provide communication coverage for a particular geographic area and may communicate with terminal devices located within the coverage.

FIG. 1 exemplarily illustrates one network device and two terminal devices. Optionally, the communication system 100 may include multiple network devices, and other numbers of terminal devices may be included within the coverage of each network device, which is not limited by the embodiments of the present disclosure.

Optionally, the communication system 100 may also include other network entities, such as, network controllers, mobility management entities, etc., which are not limited by the embodiments of the present disclosure.

It is to be understood that devices having communication functions in the network or system in the embodiments of the present disclosure may be referred to as communication devices. The communication system 100 illustrated in FIG. 1 is taken as an example, the conununication device may include a network device 110 and terminal devices 120 that both have the communication function, and the network device 110 and the terminal devices 120 may be the devices described above, which will not be described herein. The communication device may also include other devices in the communication system 100, such as, network controllers, mobility management entities and other network entities, which are not limited in the embodiments of the present disclosure.

It is to be understood that the terms "system" and "network" are often used interchangeably herein. In the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

It is to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In the embodiments of the present disclosure, the "predefined" may be achieved by pre-storing corresponding codes, tables or other means used for indicating relevant information in devices (e.g., including terminal devices and network devices), and the specific implementation thereof is not limited in the present disclosure. For example, predefined may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In order to facilitate understanding of the technical schemes of the embodiments of the present disclosure, a neural network related to the present disclosure will be described.

The neural network is an operation model formed by multiple neuron nodes connected with each other. The connections between nodes represent the weighted values from the input signals to the output signal, and are called weights. The weighted Summation (SUM) is performed on different input signals at each node and output through a specific activation function (denoted as f). FIG. 2 is a schematic structural diagram of neurons. Herein, a1, a2, ..., an represent the input signals, w1, w2, ..., wn represent the weights, f represents the activation function, and t represents the output.

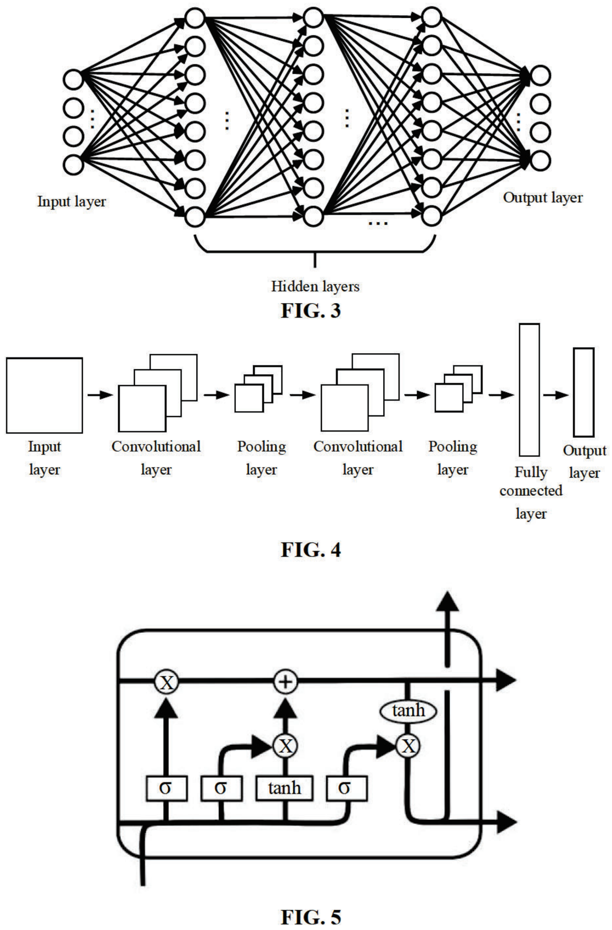

A simple neural network, as shown in FIG. 3, includes an input layer, hidden layers and an output layer. Through different connection manners between multiple neurons, weights and activation functions, different outputs may be generated, and then mapping relationship from the inputs to the outputs may be fitted. Herein, each previous-level node is connected to all of its next-level nodes, and such neural network is a fully connected neural network, which may also be called as a Deep Neural Network (DNN).

The deep learning adopts the DNN with multiple hidden layers, which greatly improves the capability of learning features by the network, which enables fitting of the complex non-linear mapping from the inputs to the output, thereby being widely used in the fields of speech processing and image processing. In addition to the DNN, for different tasks, the deep learning also includes commonly used basic structures, such as the Convolutional Neural Network (CNN) and the Recurrent Neural Network (RNN).

The basic structure of one convolutional neural network includes: an input layer, multiple convolutional layers, multiple pooling layers, a fully connected layer and an output layer, as shown in FIG. 4. In the convolutional layer, each neuron of a convolution kernel is locally connected to the inputs of the neuron, and the polling layer is introduced to extract local maximum or average features from a certain layer, which effectively reduces the parameters of the network and mines the local features, so that the convolutional neural network may converge quickly and obtain excellent performance.

The RNN is a neural network that models sequence data. It has made remarkable achievements in the field of natural language processing, such as machine translation and speech recognition. Specifically, the information from the past moment is memorized by the network and is used in the calculation for the current output. That is to say, the nodes between the hidden layers are no longer unconnected but connected, and the inputs of the hidden layers include not only the current input of the input layer but also the outputs of the hidden layers at the previous moment. The commonly used RNN include the structures such as, the Long Short-Term Memory network (LSTM) and the Gated Recurrent Unit (GRU). FIG. 5 shows a basic LSTM unit structure that may include activation function tanh. Different from the RNN where only the lasted state is considered, the cell state of the LSTM may determine which states to retain and which states to discard, which solves the shortcomings of the traditional RNN in long-term memory.

In order to facilitate understanding of the technical schemes of the embodiments of the present disclosure, the positioning method related to the present disclosure will be described.

In the related art, the positioning method may be classified into the following categories: a UE-based positioning method, a UE-assisted or Location Management Function (LMF)-based positioning method and a network node-assisted positioning method.

For the UE-based positioning method, the terminal directly calculates the location of the target UE.

For the UE-assisted/LMF-based positioning method, the terminal reports measurement results to the LMF, and the LMF calculates the location of the target UE based on the collected measurement results.

For the network node-assisted (e.g., NG-RAN node-assisted) positioning method, the base station reports the measurement results of the Transmission/Reception Point (TRP) to the LMF, and the LMF calculates the location of the target UE based on the collected measurement results.

In the traditional positioning method, for different methods, the UE or LMF estimates the location of the target UE by using traditional algorithms, such as Chan algorithm, Taylor expansion and other algorithms.

In order to support various positioning methods, a Positioning Reference Signal (PRS) is introduced in the downlink and a Sounding Reference Signal (SRS) for positioning is introduced in the uplink.

The NR-based positioning function mainly involves three parts: a terminal (i.e., UE), multiple TRPs, and a location server. Herein, multiple TRPs around the terminal participate in cellular positioning; and one base station may be one TRP, or one base station may have multiple TRPs. The location server is responsible for a positioning flow. The location server may include the LMF.

The downlink-based positioning method may be further classified into the following two categories: a UE-assisted positioning method and a UE-based positioning method.

### 1. UE-assisted positioning method

Herein, the UE is responsible for positioning-related measurements, and the network calculates the location information according to the measurement results reported by the UE.

### 2. UE-based positioning method

Herein, the UE performs the positioning-related measurements, and calculates the location information based on the measurement results.

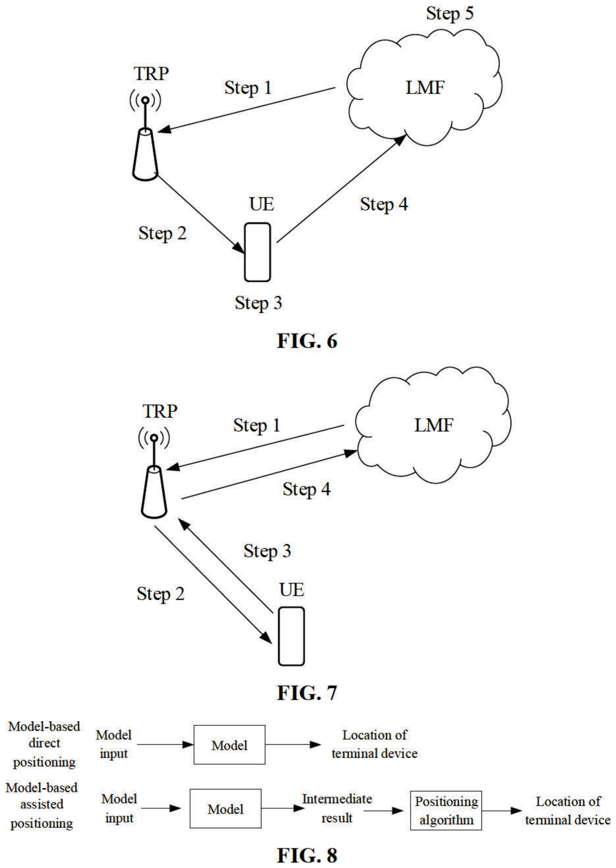

One of the downlink-based positioning methods (such as, the UE-assisted positioning method) is taken as an example to explain a basic positioning flow, as shown in FIG. 6.

In step 1, a location server notifies a TRP-related configuration.

The TRP-related configuration may include: configuration information of PRS and/or a type of measurement result required to be reported by the terminal, etc.

In step 2, TRP sends a PRS.

In step 3, UE receives the PRS and performs a measurement.

Herein, according to different positioning methods, the measurement results required by the UE may also be different.

In step 4, the UE may feedback the measurement result to the location server.

For example, the UE feeds back the measurement result to the location server through the base station.

In step 5, the location server calculates location-related information.

FIG. 6 illustrates an execution flow of a UE-assisted positioning method. For the UE-based positioning method, in the aforementioned step 4, the UE may directly calculate location-related information according to the measurement result, and does not need to report the measurement result to the location server, and then the calculation is performed by the location server. In the UE-based positioning method, the UE needs to know the location information corresponding to the TRP, and therefore, the network needs to notify the location information corresponding to the TRP to the UE in advance.

One of the uplink-based positioning methods is taken as an example to explain a basic positioning flow, as shown in FIG. 7, and the basic positioning flow includes the following steps.

In step 1, a location server notifies TRP-related configurations.

In step 2, a base station sends related signaling to UE.

In step 3, the UE sends an uplink signal, such as SRS for positioning, according to the related training.

In step 4, the TRP measures SPS for positioning and sends a measurement result to the location server.

In step5, the location server calculates location-related information.

The model may be combined with any positioning method to replace the traditional algorithm, to estimate the location of terminal device, thereby improving the accuracy. The model may be deployed at the UE side or at the LMF side, or at both the UE side and the LMF side. The combination of the model and positioning method may be classified into: model-based direct positioning method and model-based assisted positioning method. As shown in FIG. 8, for the model-based direct positioning method, the location of the terminal device is directly determined according to the input information, and for the model-based assisted positioning method, an intermediate result is determined according to the input information, and the location of the terminal device is further determined according to a positioning algoritlun.

In the model-based positioning method, the introduction of AI/ML function recognition and AI/ML model recognition is considered.

For the AI/ML function recognition, the network side and the UE side recognizes the AI/ML function through the same procedure or method. For the model at the UE side, the AI/ML function recognition is reported to the network device through the UE capability. The network device activates/deactivates/fallback/switches the AI/ML function through the signaling, such as, Radio Resource Control (RRC), Media Access Control Control Element (MAC CE), and Downlink Control Information (DCI).

For the AI/ML model recognition, the network side and the UE side recognizes the AI/ML model through the same procedure or method.

However, how to define the AI/ML function, the AI/ML model and the relationship between the AI/ML function and the AI/ML model is an urgent problem to be solved.

In order to facilitate understanding of the technical schemes of the embodiments of the present disclosure, related technologies of the embodiments of the present disclosure are described below. The following related technologies used as optional solutions may be combined with technical scheme of the embodiments of the present disclosure in various ways, and the combinations belong to the scope of protection of the embodiments of the present disclosure.

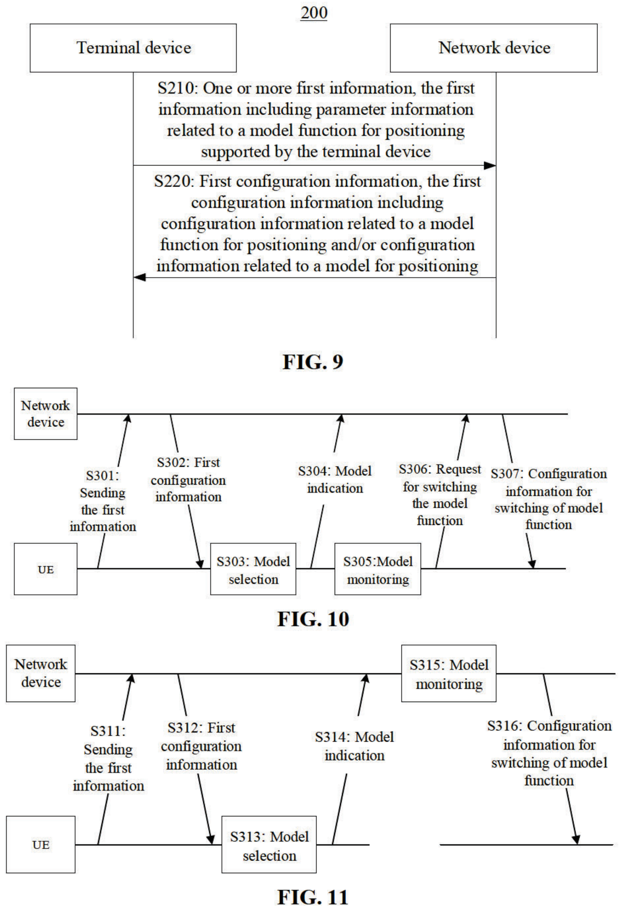

FIG. 9 is a schematic interaction diagram of a method 200 for wireless communication according to an embodiment of the present disclosure. As shown in FIG. 9, the method 200 includes at least some of the following operations S210, S220.

In operation S210, a terminal device sends at least one first information to a network device.

Correspondingly, the network device receives the at least one first information sent by the terminal device.

In operation S220, the network device sends first configuration information to the terminal device.

Correspondingly, the terminal device receives the first configuration information sent by the network device.

In some embodiments, the network device may be a base station (e.g., a gNb) or LMF.

In some embodiments, the first information includes parameter information related to a model function for positioning supported by the terminal device. In other words, the first information is used to determine the model function for positioning supported by the terminal device.

In some embodiments, the first configuration information includes: configuration information related to a model function for positioning and/or configuration information related to a model for positioning. In other words, the first configuration information is used for configuring the model function and/or model for positioning for the terminal device.

In some embodiments, the model for positioning is deployed on the terminal device side, the model may be determined according to the first configuration information, and the first configuration information may be determined according to the first information. The model may be used to determine location information of the terminal device, or may determine intermediate information of the location information of the terminal device. That is to say, the first model may be used for direct positioning of the terminal device, or may be used for assisted positioning of the terminal device.

In some embodiments, the intermediate information of the location information of the terminal device may for example include, but is not limited to, one or more of the following:
**time** of arrival (ToA), Downlink time Difference of Arrival (DL TDOA), Downlink Angle of Departure (DL AoD), Reference Signal Receiving Power (RSRP), Reference Signal Receiving Quality (RSRQ), DL Reference Signal Time Difference (DL RSTD), Line of Sight/Non-Line of Sight (LOS/NLOS) identification, Uplink time Difference of Arrival (UL TDOA), Uplink Angle of Arrival (UL AoD), Uplink Relative Time of Arrival (UL RTOA), or Distance information between the terminal device and the network device.

Optionally, the network device may be a base station, and the base station may have one TRP or multiple TRPs. Optionally, the distance information between the terminal device and the network device may refer to the intermediate information between the terminal device and one or more TRPs.

In some embodiments, the first information includes, but is not limited to, at least one of the following parameters:
a positioning mode, model input-related information, model output-related information, reference signal-related information, model complexity information, computational complexity information of a model, or Timing Error Group (TEG) information of the terminal device.

In some embodiments, the positioning mode is a direct positioning mode or an assisted positioning mode.

For example, the model function for positioning may be defined in a granularity of the positioning mode. For example, different positioning modes correspond to different model functions.

For the direct positioning mode, the output of the model may be the location information of the terminal device; and for the assisted positioning mode, the output of the model may be the intermediate information of the location information of the terminal device.

In some embodiments, the model function for positioning may be defined in a granularity of the model input-related information.

For example, different pieces of input-related information correspond to different model functions.

In some embodiments, the model input-related information includes at least one of the followings:
dimension information of a model input parameter, or type information of the model input parameter.

In some embodiments, the dimension information of the model input parameter may include, but is not limited to, the number of TRPs and/or the number of non-zero values in the model input parameters.

Optionally, the number of the TRPs is n, where n is a positive integer, for example, n is 1, 3, 18, etc.

Optionally, the number of non-zero values in the model input parameters is m, where m is an integer power of 2, for example, m is 16, 32, 64, 128, 256, etc.

In some embodiments, the location information of the model input parameter may be a range of the number of the TRPs and/or a range of the number of non-zero values in the model input parameters. For example, different number ranges of TRP correspond to different model functions. For example, different number ranges of model input parameters correspond to different model functions.

In some embodiments, the type information of the model input parameter may include, but is not limited to, at least one of the followings:
a Channel Impulse Response (CIR), a Power Delay Profile (PDP), ToA, a DL TDOA, a DL AoD, a RSRP, a DL RSTD, or a RSRQ.

Optionally, the model function for positioning may be defined in a granularity of the type of model input parameter. For example, model input parameters having different types correspond to different model functions.

In some embodiments, the model function for positioning may be defined in a granularity of the model output-related information.

For example, different pieces of model output-related information correspond to different model fimctions.

In some embodiments, the model output-related information includes location information of the terminal device.

For example, for the direct positioning mode, the model output-related information may be the location information of the terminal device.

In some embodiments, the model output-related information includes the intermediate information of the location information of the terminal device. For example, the model output-related information includes, but is not limited to, at least one of the followings:

the ToA, the DL TDOA, the DL AoD, the RSRP, the RSRQ, the DL RSTD, the positioning scenario information (such as, the LOS/NLOS identification information), the UL TDOA, the UL AoD, the UL RTOA, the distance information between the terminal device and the network device.

For example, for the assisted positioning mode, the model output-related information may be the intermediate information of the location information of the terminal device.

In a specific embodiment, when the model output-related information is the location information of the terminal device, it corresponds to one model function, and when the model output-related information is the intermediate information of the location information of the terminal device, it corresponds to another model function.

In some embodiments, the model function for positioning may be defined in a granularity of the reference signal-related information.

For example, different pieces of reference signal-related information correspond to different model functions.

In some embodiments, the reference signal-related information includes PRS-related information and/or SRS-related information. The SRS may be the SRS for positioning.

In some specific embodiments, the model function for positioning may be defined in a granularity of the PRS-related information. For example, different pieces of PRS-related information correspond to different model functions.

In other specific embodiments, the model function for positioning may be defined in a granularity of the SRS-related information. For example, different pieces of SRS-related information correspond to different model functions.

In some embodiments, the PRS-related information includes, but is not limited to, at least one of the followings:

PRS processing capability-related information, or PRS resource-related information.

In some embodiments, the PRS processing capability-related information includes, but is not limited to, at least one of the followings:
a maximum PRS bandwidth supported by the terminal device, a maximum number of positioning frequency layers supported by the terminal device, or a maximum number of PRS resources that the terminal device is able to process in one slot.

In some embodiments, the PRS resource-related information includes, but is not limited to, at least one of the followings:
a maximum number of PRS resource sets for each TRP in each positioning frequency layer, a maximum total number of TRPs across all frequency points, a maximum number of positioning frequency layers supported by the terminal device, a maximum number of PRS resources in each PRS resource set, or a maximum number of PRS resources in each positioning frequency layer.

In some embodiments, the SRS-related information includes, but is not limited to, at least one of the followings:
SRS processing capability-related information, type information for a pathloss reference signal of SRS (reference signal for pathloss estimation for SRS), type information of a reference signal for spatial relation information for SRS (spatial relation for SRS for positioning based on reference signal).

In some embodiments, the SRS processing capability-related information includes, but is not limited to, at least one of the followings:
a maximum number of SRS resource sets for positioning in each BWP, a maximum number of SRS resources for positioning in each BWP, a maximum number of aperiodic SRS resources for positioning in each BWP, a maximum number of periodic SRS resources for positioning in each BWP, or a maximum number of semi-persistent SRS resources for positioning in each BWP.

In some embodiments, the type of the pathloss reference signal of SRS may include, but is not limited to, at least one of: a PRS, a Synchronization Signal Block (SSB), or a Channel State Information Reference Signal (CSI-RS).

Optionally, the above types of reference signals may be reference signals from a serving cell, or may be reference signals from a neighboring cell.

In some specific embodiments, the type information of the pathloss reference signal of SRS includes, but is not limited to, at least one of the followings:
whether a PRS from a serving cell is supported as the pathloss reference signal of SRS, whether a CSI-RS from the serving cell is supported as the pathloss reference signal of SRS, whether an SSB signal from a neighbouring cell is supported as the pathloss reference signal of SRS, or whether a PRS from the neighbouring cell is supported as the pathloss reference signal of SRS .

In some embodiments, the type information of the reference signal for spatial relation information for SRS may include, but is not limited to, at least one of: a PRS, an SSB, or a CSI-RS.

Optionally, the above types of reference signals may be reference signals from the serving cell, or may be reference signals from the neighboring cell.

In some specific embodiments, the type information of the reference signal for spatial relation information for SRS includes, but is not limited to, at least one of the followings:
whether a PRS from a serving cell is supported as the reference signal for spatial relation information for SRS (spatial relation for SRS for positioning based on PRS from the serving cell), whether a CSI-RS from the serving cell is supported as the reference signal for spatial relation information for SRS (spatial relation for SRS for positioning based on CSI-RS from the serving cell), whether an SSB from a neighbouring cell is supported as the reference signal for spatial relation information for SRS (spatial relation for SRS for positioning based on SSB from the neighbouring cell), or whether a PRS from the neighbouring cell is supported as the reference signal for spatial relation information for SRS (spatial relation for SRS for positioning based on PRS from the neighbouring cell), or whether SRS for positioning in a working band is supported as the reference signal for spatial relation information for SRS (spatial relation for SRS for positioning based on SRS).

In some embodiments, the model function for positioning may be defined in a granularity of the model complexity information. For example, different pieces of model complexity information correspond to different model functions.

In some embodiments, the model complexity information includes, but is not limited to: the number of model parameters and/or complexity of the model structure, such as the number of layers of the model.

In some specific embodiments, the model complexity information indicates a target parameter number range and/or a target layer number range. The target parameter number range is a range to which a number of parameters included in a model belongs, and the target layer number range is a range to which a number of layers of the model belongs.

In some embodiments, the target parameter number range is one of multiple parameter number ranges, and the multiple parameter number ranges correspond to different number intervals. Optionally, different parameter number ranges correspond to different model functions.

In some embodiments, the multiple parameter number ranges are configured by the network device or predefined.

In some embodiments, the target layer number range is one of multiple layer number ranges, and the multiple layer number ranges correspond to different number intervals. Optionally, different layer number ranges correspond to different model functions.

In some embodiments, the multiple layer number ranges are configured by the network device or predefined.

In some embodiments, the model function for positioning may be defined in a granularity of the computational complexity information of a model. For example, different pieces of computational complexity information correspond to different model functions.

In some embodiments, the computational complexity information of the model includes a complexity of the model performing a Floating Point Operation (FLOP).

In some embodiments, the computational complexity information of the model indicates a target computational complexity range, and the target computational complexity range is a range to which a computational complexity of a model belongs.

In some embodiments, the target computational complexity range is one of multiple computational complexity ranges, and the multiple computational complexity ranges correspond to different complexity intervals. Optionally, different computational complexity ranges correspond to different model functions.

In some embodiments, the multiple computational complexity ranges are configured by the network device or predefined.

In some embodiments, the model function for positioning may be defined in a granularity of the TEG information of the terminal device. For example, different pieces of computational TEG information correspond to different model functions.

In some embodiments, the TEG information of the terminal device includes, but is not limited to, at least one of the followings:
a maximum number of receive TEGs of the terminal device, a maximum number of transmit TEGs of the terminal device, or a maximum number of Receive-Transmit (Rx-Tx) TEGs of the terminal device.

In some embodiments, different number ranges to which the number of the receive TEGs of the terminal device belongs correspond to different model functions.

In some embodiments, different number ranges to which the number of the transmit TEGs of the terminal device belongs correspond to different model functions.

In some embodiments, different number ranges to which the number of the Rx-Tx TEGs of the terminal device belongs correspond to different model functions.

In some embodiments, each of the at least one first information corresponds to one model function, and the first information corresponding to each model function comprise different parameter sets and/or different contents of parameters.

Therefore, the model functions in different granularities may be implemented through the parameter sets included in the first information. For example, the first information includes a positioning model, and different model functions may be distuiguished through the positioning mode, so that model functions having a larger granularity may be implemented. For another example, the first information includes reference signal information, and different model functions may be distinguished through the reference signal information, so that model functions having a smaller granularity may be implemented. Therefore, in the embodiments of the present disclosure, the flexible control of the granularity of the model functions may be implemented through the parameter sets included in the first information.

In some embodiments, a parameter set included in the first information is denoted as a first parameter set, and the first parameter sets corresponding to different pieces of first information include different parameters and/or different contents of parameters. Herein, the content of the parameter (or the parameter content) may refer to a configuration corresponding to the parameter, or a value of the parameter or a value range of the parameter.

In some specific embodiments, it is assumed that the two pieces of first information respectively correspond to model function i and model function j, a parameter set corresponding to the model function i is different from a parameter set corresponding to the model fimction j, and/or the content of the parameter corresponding to the model function i is different from the content of the parameter corresponding to the model function j.

For a first case, a first parameter set corresponding to the model function i is the same as a first parameter set corresponding to the model function j; but the content of the parameter corresponding to the model function i is different from the content of the parameter corresponding to the model function j.

For a first example, the first parameter set corresponding to the model function i includes the positioning mode, and the content of the parameter is the direct positioning mode; and the first parameter set corresponding to the model function j includes the positioning mode, and the content of the parameter is the assisted positioning mode.

For a second example, the first parameter set corresponding to the model function i includes the positioning mode and the reference signal-related information, the content of the positioning mode is the direct positioning mode, and the content of the reference signal-related information is the PRS-related information; and the first parameter set corresponding to the model function j includes the positioning mode and reference signal information, the content of the positioning mode is the direct positioning mode, and the content of the reference signal-related information is the SRS-related information.

For a second case, the first parameter set corresponding to the model function i is different from the first parameter set corresponding to the model function j; and the content of the parameter corresponding to the model function i is different from the content of the parameter corresponding to the model function j.

For a third example, the first parameter set corresponding to the model function i includes the positioning mode, and the content of the positioning mode is the direct positioning mode; and the first parameter set corresponding to the model function j includes the positioning mode and model output-related information, and the content of the positioning mode is the assisted positioning mode, and the content of the model output-related information is the LOS/NLOS identification.

In some embodiments, each model function corresponds to a number P of models, where P is a positive integer. That is to say, one model function may correspond to one or more models.

Optionally, the granularity of the model function is the same as the granularity of the model; or, the granularity of the model function is greater than the granularity of the model, for example, multiple models may implement the same model function.

In some embodiments, respective models of the P models correspond to different parameter sets and/or different contents of parameters.

In some embodiments, a parameter set corresponding to the model is denoted as a second parameter set, and the second parameter sets corresponding to different models include different parameters and/or different contents of parameters. Herein, the content of the parameter may refer to the configuration corresponding to the parameter, or the value of the parameter or the value range of the parameter.

In some embodiments, the second parameter set includes, but is not limited to, at least one of the following parameters:
reference signal configuration information, model complexity information, computational complexity information of the model, TEG information of the terminal device, timing error information of the terminal device, synchronization error information of the network device, or application scenario.

In some embodiments, the reference signal configuration information may include PRS configuration information or SRS configuration information.

In some embodiments, the PRS configuration information includes, but is not limited to, at least one of the followings:
a positioning frequency layer-related configuration, a TRP-related configuration, a PRS resource set-related configuration, or a PRS resource-related configuration.

In some embodiments, the SRS configuration information includes, but is not limited to, at least one of the followings:
a SRS resource set-related configuration, or a SRS resource-related configuration.

In some embodiments, the positioning frequency layer-related configuration includes one or more of the followings:
a maximum number of positioning frequency layers supported by the terminal device, a maximum number of PRS resource sets for each TRP in each positioning frequency layer, and a maximum number of PRS resources in each positioning frequency layer.

In some embodiments, the TRP-related configuration may include one or more of the followings:
a maximum number of PRS resource sets for each TRP in each positioning frequency layer, and a maximum total number of TRPs across all frequency points.

In some embodiments, the PRS resource set-related configuration includes one or more of the followings:
time-domain configuration information of the PRS resource set and/or frequency configuration information of the PRS resource set, such as the transmission period and slot offset of the PRS, and a time interval for repetition of the PRS resource;
a repetition factor for the PRS resource, such as the number of repetitions of the PRS resource in each PRS period;
a muting configuration of the PRS, for example, the PRS is not sent on certain allocated time-frequency resources (which is referred to as the muting); and
the number of Orthogonal Frequency-Division Multiplexing (OFDM) symbols occupied by the PRS resource.

In some embodiments, the PRS resource-related configuration includes, but is not limited to, one or more of the followings:
a starting frequency-domain resource unit offset of PRS, such as, an offset value of frequency-domain resource units used for resource mapping of the PRS resource on the first allocated OFDM symbols within one slot;
a PRS resource slot offset, such as, a slot offset relative to the PRS resource set;
QCL information of PRS; and
the number of ports of PRS.

In some embodiments, the SRS resource set-related configuration includes, but is not limited to, one or more of the followings:
types of SRS resources in an SRS resource set, such as, aperiodic, semi-persistent, periodic; and
a configuration related to open-loop power control parameters.

In some embodiments, the SRS resource-related configuration includes, but is not limited to, one or more of the followings:
the number of ports of SRS resource; and
the transmission comb of SRS.

In some embodiments, the first parameter set corresponding to the model function i includes the positioning mode, and the content of the parameter is the direct positioning mode. The model function i corresponds to P models (denoted as model 0 to model P-1). In some embodiments, the P models correspond to different second parameter sets and/or different contents of parameters. The model 0 and model 1 among the P models are taken as an example.

For a first case, a second parameter set corresponding to the model 0 is the same as a second parameter set corresponding to the model 1, but the content of the parameter corresponding to the model 0 is different from the content of the parameter corresponding to the model 1.

For a first example, the second parameter set corresponding to the model 0 includes reference signal configuration information, and the content of the reference signal configuration information is a first reference signal configuration. The second parameter set corresponding to the model 1 includes reference signal configuration information, and the content of the reference signal configuration information is a second reference signal configuration. Herein, the first reference signal configuration is different from the second reference signal configuration.

For a second example, the second parameter set corresponding to the model 0 includes the model complexity information, and the content of the reference signal configuration information is a first model complexity range; and the second parameter set corresponding to the model 1 includes the model complexity information, and the content of the model complexity information is a second model complexity range. Herein, the first model complexity range is different from the second model complexity range.

For a third example, the second parameter set corresponding to the model 0 includes the timing error information of the terminal device, and the content of the timing error information of the terminal device is a first timing error; and the second parameter set corresponding to the model 1 includes the timing error information of the terminal device, and the content of the timing error information of the terminal device is a second timing error. Herein, the first timing error is different from the second timing error.

For a second case, the second parameter set corresponding to the model 0 is different from the second parameter set corresponding to the model 1, and the content of the parameter corresponding to the model 0 is different from the content of the parameter corresponding to the model 1.

For a fourth example, the second parameter set corresponding to the model 0 includes the synchronization error information of the network device, and the content of the synchronization error information of the network device is a first synchronization error; and the second parameter set corresponding to the model 1 includes the timing error information of the terminal device, and the content of the synchronization error information of the network device is a third timing error.

In some embodiments, the first information may explicitly correspond to one model function. For example, the first information includes first indication information, and the first indication information indicates a model function corresponding to the first information. As an example, the first indication information may indicate an index of the model function corresponding to the first information.

In some embodiments, the first information may implicitly correspond to one model function. In this case, the first information may not include the first indication information.

In some embodiments, the first configuration information includes second indication information, and the second indication information indicates a target model fimction configured by the network device for the terminal device. For example, the second indication information may indicate an index of the target model function. In this case, it may be considered that the first configuration information includes configuration information related to the model function.

In some embodiments, the first configuration information may be determined according to the at least one first information. Herein, each piece of first information corresponds to one model function, the network device may determine the target model function according to the model function corresponding to the at least one first information, and further indicate the target model function to the terminal device through the second indication information.

Optionally, in a case where the first information includes the first indication information, the first configuration information includes the second indication information.

That is to say, the network device may determine the model function corresponding to each of the first information according to the first indication information in the at least one first information, and may further indicate the target model function to the terminal device through the second indication information.

Furthermore, optionally, the terminal device may select one of the P models corresponding to the target model function as the target model. For example, the terminal device may randomly select one of the P models as the target model, or may determine the target model according to the performance of the P models.

By way of example and not limitation, the performance of the P models include at least one of the following performance:
the model complexity, the computational complexity of the model, or the positioning accuracy of the model.

In some embodiments, the positioning accuracy of the model may be an error between the location-related information of the terminal device determined according to the model output and the actual location-related information of the terminal device, or may be a distribution of the location-related information of the terminal device.

In some specific embodiments, the positioning accuracy may be an error between the predicted location information of the terminal device and the actual location information of the terminal device, or may be a distribution of the predicted location information of the terminal device.

Optionally, the output information of the model is location information of the terminal device, and the predicted location information of the terminal device may be the output information of the model. This corresponds to the direct positioning mode.

Optionally, the output information of the model is intermediate information of the location information of the terminal device, and the predicted location information of the terminal device may be obtained by further performing the calculation based on the output information of the model. This corresponds to the assisted positioning mode.

In other embodiments, the positioning accuracy may be an error between the intermediate information of the predicted location information of a terminal device and the intermediate information of the actual location information of the terminal device, or may be a distribution of the intermediate information of the predicted location information of the terminal device, or a distribution of the error between the intermediate information of the predicted location information of the terminal device and the intermediate information of the actual location information of the terminal device.

For example, the output information of the model is the intermediate information of the location information of the terminal device, such as distance information between the terminal device and the network device. In this case, the positioning accuracy may be an error between the distance information between the terminal device and the network device predicted by the model and the actual distance information between the terminal device and the network device.

In some embodiments, the terminal device may select a model that satisfies at least one of the following conditions among the P models as the target model:
a model having the highest positioning accuracy or having a positioning accuracy that reaches a first positioning accuracy threshold among the P models;
a model having the lowest model complexity or having a model complexity that satisfies a preset condition among the P models; or
a model having the lowest computational complexity of the model or having a computational complexity of the model that satisfies a preset condition among the P models.

In some embodiments, the model complexity satisfying the preset condition may include that: the dimension of the model input parameter is less than the first dimension threshold, and/or the number of layers of the model structure is less than the first layer number threshold.

In some embodiments, the computational complexity of the model satisfying the preset condition may include that: the computational complexity of the model is less than the first computational complexity threshold.

Optionally, the first positioning accuracy may be in units of meters, centimeters, or millimeters, which is not limited in the present disclosure.

In some embodiments, the first positioning accuracy threshold may be configured by the network device, determined by the terminal device itself, predefined, or preconfigured.

In some embodiments, the first dimension threshold may be configured by the network device, determined by the terminal device itself, predefined, or preconfigured.

In some embodiments, the first layer number threshold may be configured by the network device, determined by the terminal device itself, predefined, or preconfigured.

In some embodiments, the first computational complexity threshold may be configured by the network device, determined by the terminal device itself, predefined, or preconfigured.

In some embodiments, the first configuration information includes third indication information and fourth indication information.

The third indication information indicates a target model configured by the network device for the terminal device.

The fourth indication information indicates parameter information corresponding to the target model.

In some embodiments, the parameter information corresponding to the target model is determined according to the first information. In other words, the parameter information corresponding to the target model matches with the first information.

In some embodiments, the third indication information may indicate an index of the target model, and the fourth indication information may indicate a second parameter set corresponding to the target model.

For example, in the case where the first information does not include the first indication information, the network device may indicate the target model and the parameter information corresponding to the target model to the terminal device. In this case, it may be considered that the first configuration information includes configuration information related to the model.

In some embodiments, the first configuration information may include only the third indication information, and may not include the fourth indication information.

For example, the first information may include P pieces of fifth indication information and P pieces of sixth indication information. Herein, each of the P pieces of fifth indication information corresponds to a respective one of the P pieces of sixth indication information. Each piece of fifth indication information indicates one of the P models corresponding to the model function corresponding to the first information. For example, the fifth indication information indicates an index of the model, and the sixth indication information indicates a second parameter set corresponding to the model indicated by the fifth indication information. In this case, the first configuration information may include only the third indication information, and may not include the fourth indication information. The third indication information may indicate an index of a target model selected by the network device for the terminal device among the P models.

In some embodiments, the first configuration information may also include the second indication information and the third indication information. That is to say, the network device may simultaneously configure the target model function and the target model for the terminal device. Herein, models corresponding to the target model function include the target model.

For example, when the first information includes indication information of a model function (such as, the first indication information), the first parameter set corresponding to the model function, indication information of a model (such as, the P pieces of fifth indication information), and the second parameter set corresponding to the model (such as, the P pieces of sixth indication information), the first configuration information may include indication information of the target model function and indication information of the target model.

In some embodiments, each of the at least one first information is carried in a respective independent structure.

As an example, the structure for carrying the first information is designed as follows:

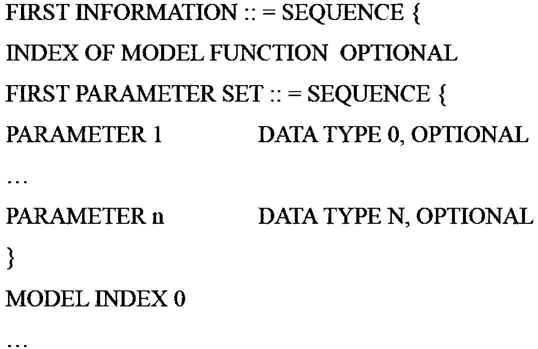

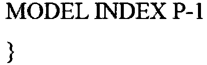

In some embodiments, the at least one first information is carried in one structure.

As an example, the structure for carrying all pieces of first information is designed as follows:

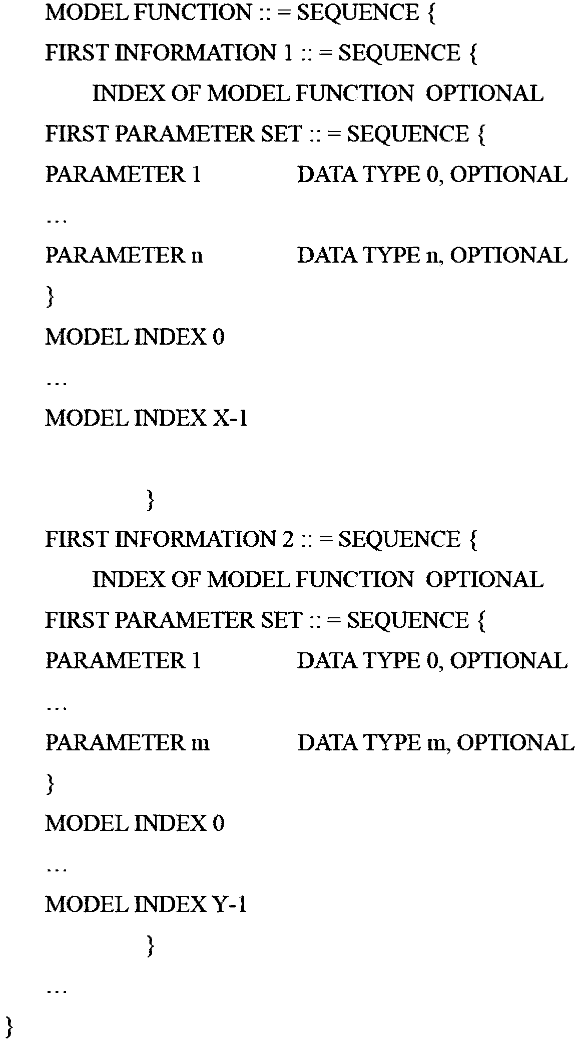

Herein, the model function corresponding to the first one of the at least one first information corresponds to X models, the model fimction corresponding to the second one of the at least one first information corresponds to Y models. Optionally, the first information may further include a second parameter set corresponding to each model.

In some embodiments, the terminal device may also report to the network device a maximum number t of model functions it is able to store.

In some embodiments, the first configuration information may be carried through first signaling, and the first signaling may be, such as, RRC signaling, MAC CE signaling, or DCI signaling, etc.

In some embodiments, the index of the model function configured by the network device may be indicated through n bits in the first signaling. Herein, n is determined from t, e.g. 2ⁿ is greater than or equal to t. For example, the index of the model function configured by the network device is indicated through different values of n bits.

Therefore, in the embodiments of the present disclosure, through explicitly indicating the configuration of the model function, the implementation at the network device side is simplified, and the selection of the model at the terminal device side is also more flexible. Moreover, since the model may occupy the storage space of the terminal device, setting the maximum number of stored model functions enables to reduce the complexity of implementation of the terminal.

With reference to FIG. 10 and FIG. 11, schematic interactive diagrams illustrating configuration manners of the model function provided by the embodiments of the present disclosure will be described below.

In the example shown in FIG. 10, the model is deployed on the terminal device side, and a terminal device performs model performance monitoring.

As shown in FIG. 10, the following operations S301 to S307 may be included.

In operation S301, the terminal device sends first information to a network device, where the specific implementation of the first information refers to the relevant description in the foregoing embodiments, which will not be repeatedly described herein.

In operation S302, the network device sends first configuration information to the terminal device, and the first configuration information is used for configuring a first model fimction for the terminal device.

In operation S303, the terminal device selects a target model based on the first model function configured by the network device, the specific selection manner of which may refer to specific implementations of the foregoing embodiments.

Optionally, after the target model is selected, operation S304 is further included. In operation S304, the terminal device sends indication information to the network device, and the indication information indicates the target model selected by the terminal device, for example, the indication information indicates an index of the target model. Optionally, if the network device does not know the second parameter set corresponding to the target model, the terminal device may further indicate the second parameter set corresponding to the target model to the network device.

Optionally, the terminal device may further send first request information to the network device, and the first request information is used for requesting for the model monitoring.

Optionally, the network device may send configuration information for model monitoring, such as, reference signal configuration information, to the terminal device. Optionally, the reference signal configuration information includes the time-domain configuration information of the reference signal and/or the frequency configuration information of the reference signal.

In operation S305, the terminal device performs the model monitoring for the target model.

For example, the terminal device performs the model monitoring based on the configuration information for model monitoring sent by the network device.

In operation S306, the terminal device feeds back a model monitoring result to the network device. For example, the terminal device sends second request information to the network device, to request for switching of model function. Optionally, in the case where the model monitoring result does not satisfy the requirements, the terminal device may request for switching of model function.

In operation S307, the network device configures configuration information for model switching for the terminal device. For example, the network device may indicate a second model function to the terminal device. Herein, the first parameter set and/or the content of the parameter corresponding to the first model function is different from the first parameter set and/or the content of the parameter corresponding to the second model function.

In the example shown in FIG. 11, the model is deployed on the terminal device side, and the network device performs the model performance monitoring.

As shown in FIG. 11, the following operations S301 to S307 may be included.

In operation S311, the terminal device sends first information to a network device, where the specific implementation of the first information refers to the relevant description in the foregoing embodiments, which will not be repeatedly described herein.

In operation S312, the network device sends first configuration information to the terminal device, and the first configuration information is used for configuring a first model function for the terminal device.

In operation S313, the terminal device selects a target model based on the first model function configured by the network device, the specific selection manner of which may refer to specific implementations of the foregoing embodiments.

Optionally, after the target model is selected, operation S304 is further includes. In operation S304, the terminal device sends indication information to the network device, and the indication information indicates the target model selected by the terminal device, for example, the indication information indicates an index of the target model. Optionally, if the network device does not know the second parameter set corresponding to the target model, the terminal device may further indicate the second parameter set corresponding to the target model to the network device.

In operation S315, the network device performs model monitoring for the target model.

In operation S316, the network device configures configuration information for model switching for the terminal device.

For example, in the case where a model monitoring result does not satisfy the requirements, the network device may indicate a second model function to the terminal device. Herein, the first parameter set and/or the content of the parameter corresponding to the first model function is different from the first parameter set and/or the content of the parameter corresponding to the second model function.

To sum up, in the embodiments of the present disclosure, the granularity of the model function is defined, for example, the model functions in different granularities may be implemented through the parameter sets included in the first information; and the relationship between the model fimction and the model is defined, for example, one model fimction may correspond to one or more models, and different models correspond to different parameter sets and/or the contents of the parameters. Herein, the granularity of the model function is the same as the granularity of the model; or, the granularity of the model fimction is greater than the granularity of the model. For example, multiple models may implement the same model function.

A structure has been further designed for reporting model fimction-related information to the network device. For example, information (such as, the first information, information of a model corresponding to a model function) related to multiple model functions may be reported through one structure, or information related to each of the model functions may be reported through a respective independent structure.

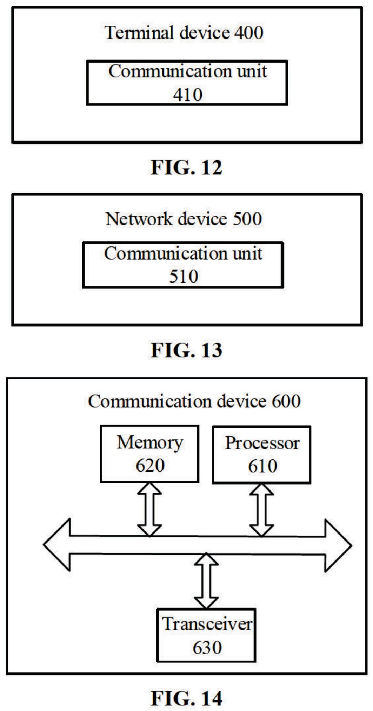

The method embodiments of the present disclosure have been described in detail above with reference to FIG. 9 to FIG. 11, and the device embodiments of the present disclosure are described in detail below with reference to FIG. 12 to FIG. 16. It is to be understood that the device embodiments correspond to the method embodiments, and similar descriptions of the device embodiments may refer to the method embodiments.

FIG. 12 is a schematic block diagram of a terminal device 400 according to an embodiment of the present disclosure. As shown in FIG. 12, the terminal device 400 includes a communication unit 410.

The communication unit 410 is configured to: send at least one first information to a network device, where the first information is parameter information related to a model function for positioning supported by the terminal device; and
receive first configuration information sent by the network device, where the first configuration information includes: configuration information related to a model function for positioning and/or configuration information related to a model for positioning.

In some embodiments, the first information includes at least one of the following parameters:
a positioning mode, model input-related information, model output-related information, reference signal-related information, model complexity information, computational complexity information of a model, or Timing Error Group (TEG) information of the terminal device.

In some embodiments, the positioning mode is a direct positioning model or an assisted positioning model.

In some embodiments, the model input-related information includes at least one of the followings:
a dimension of a model input parameter, or a type of the model input parameter.

In some embodiments, the model output-related information includes location infonnation of the terminal device.

In some embodiments, the model output-related information includes at least one of the followings:
TOA information of a reference signal for positioning, AoD information of the reference signal for positioning, AoA information of the reference signal for positioning, or positioning scenario information.

In some embodiments, the reference signal-related information includes PRS-related information and/or SRS-related information.

In some embodiments, the PRS-related information includes at least one of the followings:
PRS processing capability-related information, and/or PRS resource-related information.

In some embodiments, the PRS processing capability-related information includes at least one of the followings: a maximum PRS bandwidth supported by the terminal device, a maximum number of positioning frequency layers supported by the terminal device, or a maximum number of PRS resources that the terminal device is able to process in one slot.

In some embodiments, the PRS resource-related information includes at least one of the followings:
a maximum number of PRS resource sets for each TRP in each positioning frequency layer, a maximum total number of TRPs across all frequency points, a maximum number of positioning frequency layers supported by the terminal device, a maximum number of PRS resources in each PRS resource set, or a maximum number of PRS resources in each positioning frequency layer.

In some embodiments, the SRS-related information includes at least one of the followings:
SRS processing capability-related information, type information of a pathloss reference signal of SRS, type information of a reference signal for spatial relation information for SRS.

In some embodiments, the SRS processing capability-related information includes at least one of the followings:
a maximum number of SRS resource sets for positioning in each Bandwidth Part (BWP), a maximum number of SRS resources for positioning in each BWP, a maximum number of aperiodic SRS resources for positioning in each BWP, a maximum number of periodic SRS resources for positioning in each BWP, or a maximum number of semi-persistent SRS resources for positioning in each BWP.

In some embodiments, the type information of the pathloss reference signal of SRS includes at least one of the followings:
whether a PRS from a serving cell is supported as the pathloss reference signal of SRS, whether a CSI-RS from the serving cell is supported as the pathloss reference signal of SRS, whether an SSB signal from a neighbouring cell is supported as the pathloss reference signal of SRS, or whether a PRS from the neighbouring cell is supported as the pathloss reference signal of SRS.

In some embodiments, the type information of the reference signal for spatial relation information for SRS includes at least one of the followings:
whether PRS from a serving cell is supported as the reference signal for spatial relation information for SRS, whether an SSB from a neighbouring cell is supported as the reference signal for spatial relation information for SRS, whether a CSI-RS from the serving cell is supported as the reference signal for spatial relation information for SRS, or whether a PRS from the neighbouring cell is supported as the reference signal for spatial relation information for SRS, or whether SRS for positioning in a working band is supported as the reference signal for spatial relation information for SRS.

In some embodiments, the model complexity information indicates a target parameter number range, and the target parameter number range is a range to which the number of parameters included in a model belongs.

In some embodiments, the target parameter number range is one of multiple parameter number ranges, and the multiple parameter number ranges are configured by the network device or predefined.

In some embodiments, the computational complexity information of the model indicates a target computational complexity range, and the target computational complexity range is a range to which a computational complexity of a model belongs.

In some embodiments, the target computational complexity range is one of multiple computational complexity ranges, and the multiple computational complexity ranges are configured by the network device or predefined.

In some embodiments, the TEG information of the terminal device includes at least one of the followings:
a maximum number of receive TEGs of the terminal device, a maximum number of transmit TEGs of the terminal device, or a maximum number of Rx-Tx TEGs of the terminal device.

In some embodiments, each of the at least one first information corresponds to one model function, and the first information corresponding to respective model functions comprise different parameter sets and/or different contents of parameters.

In some embodiments, each model function corresponds to a number P of models, where P is a positive integer.

In some embodiments, respective models of the P models correspond to different parameter sets and/or different contents of parameters.

In some embodiments, a parameter set corresponding to each model includes at least one of the followings:
reference signal configuration information, model complexity information, computational complexity information of a model, TEG information of the terminal device, timing error information of the terminal device, synchronization error information of the network device, or application scenario.

In some embodiments, the first information includes first indication information, and the first indication information indicates a model fimction corresponding to the first information.

In some embodiments, the first configuration information includes second indication information, and the second indication information indicates a target model function configured by the network device for the terminal device.

In some embodiments, in a case where the first information includes indication information of the model function, the first configuration information includes the second indication information.

In some embodiments, the first configuration information includes third indication information and fourth indication information.

The third indication information indicates a target model configured by the network device for the terminal device.

The fourth indication information indicates parameter information corresponding to the target model.

In some embodiments, the parameter information corresponding to the target model is determined according to the first information.

In some embodiments, in a case where the first information includes no indication information of the model function, the first configuration information includes the third indication information and the fourth indication information.

In some embodiments, each of the at least one first information is carried in a respective independent structure, or the at least one first information is carried in a single structure.

Optionally, in some embodiments, the communication unit may be a communication interface or a transceiver or an input-output interface of a communication chip or a system-on-chip. The processing unit may be one or more processors.

It is to be understood that the terminal device 400 in the embodiments of the present disclosure may correspond to the terminal device in the method embodiments of the present disclosure, and the above and other operations and/or functions of the units in the terminal device 400 are intended to implement the corresponding flow of the terminal device in the method 200 illustrated in FIG. 9 to FIG. 11, which will not be elaborated herein for the sake of brevity.

FIG. 13 is a schematic block diagram of a network device according to an embodiment of the present disclosure. The network device 500 shown in FIG. 13 includes a communication unit 510.

The communication unit 510 is configured to: receive at least one first information sent by a terminal device, where the first information is parameter information related to a model function for positioning supported by the terminal device; and
send first configuration information to the terminal device, where the first configuration information includes: configuration information related to a model fimction for positioning and/or configuration information related to a model for positioning, and the first configuration information is determined according to the at least one first information.

In some embodiments, the first information includes at least one of the following parameters:
a positioning mode, model input-related information, model output-related infonnation, reference signal-related information, model complexity information, computational complexity information of a model or TEG information of the terminal device.

In some embodiments, the positioning mode is direct positioning or assisted positioning.

In some embodiments, the model input-related information includes at least one of the followings:
a dimension of a model input parameter, or a type of the model input parameter.

In some embodiments, the model output-related information includes location information of the terminal device.

In some embodiments, the model output-related information includes at least one of:
TOA information of a reference signal for positioning, AoD information of the reference signal for positioning, AoA information of the reference signal for positioning, or positioning scenario information.

In some embodiments, the reference signal-related information includes PRS-related information and/or SRS-related information.

In some embodiments, the PRS-related information includes at least one of the followings:
PRS processing capability-related information, and/or PRS resource-related information.

In some embodiments, the PRS processing capability-related information includes at least one of the followings:
a maximum PRS bandwidth supported by the terminal device, a maximum number of positioning frequency layers supported by the terminal device, or a maximum number of PRS resources that the terminal device is able to process in one slot.

In some embodiments, the PRS resource-related information includes at least one of the followings:
a maximum number of PRS resource sets for each TRP in each positioning frequency layer, a maximum total number of TRPs across all frequency points, a maximum number of positioning frequency layers supported by the terminal device, a maximum number of PRS resources in each PRS resource set, or a maximum number of PRS resources in each positioning frequency layer.

In some embodiments, the SRS-related information includes at least one of the followings:
SRS processing capability-related information, type information of a pathloss reference signal of SRS, type information of a reference signal for spatial relation information for SRS.

In some embodiments, the SRS processing capability-related information includes at least one of the followings:
a maximum number of SRS resource sets for positioning in each BWP, a maximum number of SRS resources for positioning in each BWP, a maximum number of aperiodic SRS resources for positioning in each BWP, a maximum number of periodic SRS resources for positioning in each BWP, or a maximum number of semi-persistent SRS resources for positioning in each BWP.

In some embodiments, the type information of the pathloss reference signal of SRS includes at least one of the followings:
whether a PRS from a serving cell is supported as the pathloss reference signal of SRS, whether a CSI-RS from the serving cell is supported as the pathloss reference signal of SRS, whether an SSB signal from a neighbouring cell is supported as the pathloss reference signal of SRS, or whether a PRS from the neighbouring cell is supported as the pathloss reference signal of SRS.

In some embodiments, the type information of the reference signal for spatial relation information for SRS includes at least one of the followings:
whether PRS from a serving cell is supported as the reference signal for spatial relation information for SRS, whether a CSI-RS from the serving cell is supported as the reference signal for spatial relation information for SRS, whether an SSB from a neighbouring cell is supported as the reference signal for spatial relation information for SRS, or whether a PRS from the neighbouring cell is supported as the reference signal for spatial relation information for SRS, or whether SRS for positioning in a working band is supported as the reference signal for spatial relation information for SRS .

In some embodiments, the model complexity information indicates a target parameter number range, and the target parameter number range is a range to which a number of parameters included in a model belongs.

In some embodiments, the target parameter number range is one of multiple parameter number ranges, and the multiple parameter number ranges are configured by the network device or predefined.

In some embodiments, the computational complexity information of the model indicates a target computational complexity range, and the target computational complexity range is a range to which a computational complexity of a model belongs.

In some embodiments, the target computational complexity range is one of multiple computational complexity ranges, and the multiple computational complexity ranges are configured by the network device or predefined.

In some embodiments, the TEG information of the terminal device includes at least one of the followings:
a maximum number of receive TEGs of the terminal device, a maximum number of transmit TEGs of the terminal device, or a maximum number of receive-transmit TEGs of the terminal device.

In some embodiments, each of the at least one first information corresponds to one model function, and the first information corresponding to respective model fimctions comprise different parameter sets and/or different contents of parameters.

In some embodiments, each model function corresponds to a number P of models, where P is a positive integer.

In some embodiments, respective models of the P models correspond to different parameter sets and/or different contents of parameters.

In some embodiments, a parameter set corresponding to each model includes at least one of the followings:
reference signal configuration information, model complexity information, model computational complexity information, TEG information of the terminal device, timing error information of the terminal device, synchronization error information of the network device, or application scenario.

In some embodiments, the first information includes first indication information, and the first indication information indicates a model function corresponding to the first information.

In some embodiments, the first configuration information includes second indication information, and the second indication information indicates a target model function configured by the network device for the terminal device.

In some embodiments, in a case where the first information includes indication information of the model function, the first configuration information includes the second indication information.

In some embodiments, the first configuration information includes: third indication information and fourth indication information.

[**0380]** The third indication information indicates a target model configured by the network device for the terminal device.

[**0381]** The fourth indication information indicates parameter information corresponding to the target model.

[**0382]** In some embodiments, the parameter information corresponding to the target model is determined according to the first information.

[**0383]** In some embodiments, in a case where the first information includes no indication information of the model function, the first configuration information includes the third indication information and the fourth indication information.

[**0384]** In some embodiments, each of the at least one first information is carried in a respective independent structure, or the at least one first information is carried in one structure.

[**0385]** Optionally, in some embodiments, the communication unit may be a communication interface or a transceiver or an input-output interface of a communication chip or a system-on-chip. The processing unit may be one or more processors.

[**0386]** It is to be understood that the network device 500 in the embodiments of the present disclosure may correspond to the network device in the method embodiments of the present disclosure, and the above and other operations and/or functions of the units in the network device 500 are intended to implement the corresponding flow of the network device in the method 200 illustrated in FIG. 9 to FIG. 11, which will not be elaborated herein for the sake of brevity.

[**0387]** FIG. 14 is a schematic structural diagram of a communication device 600 according to an embodiment of the present disclosure. The communication device 600 illustrated in FIG. 14 includes a processor 610. The processor 610 may be configured to call and run a computer program stored in a memory to perform each of the methods according to the embodiments of the present disclosure.

[**0388]** Optionally, as illustrated in FIG. 14, the communication device 600 may further include a memory 620. Herein, the processor 610 may be configured to call and run the computer program stored in the memory 620 to perform each of the methods according to the embodiments of the present disclosure.

[**0389]** Herein, the memory 620 may be a separate device independent of the processor 610, or may be integrated into the processor 610.

[**0390]** Optionally, as illustrated in FIG. 14, the communication device 600 may further include a transceiver 630. The processor 610 may control the transceiver 630 to communicate with other devices. Specifically, the transceiver 1430 may transmit information or data to other devices, or receive information or data from other devices.

[**0391]** Herein, the transceiver 630 may include a transmitter and a receiver. The transceiver 630 may further include one or more antennas.

[**0392]** Optionally, the communication device 600 may specifically be the network device in the embodiments of the present disclosure. The communication device 600 may implement corresponding processes that are implemented by the network device in each of the methods in the embodiments of the present disclosure. For brevity, details are not elaborated herein again.

[**0393]** Optionally, the communication device 600 may specifically be the mobile terminal/terminal device in the embodiments of the present disclosure. The communication device 600 may implement corresponding processes that are implemented by the mobile terminal/terminal device in each of the methods in the embodiments of the present disclosure. For brevity, details are not elaborated herein again.

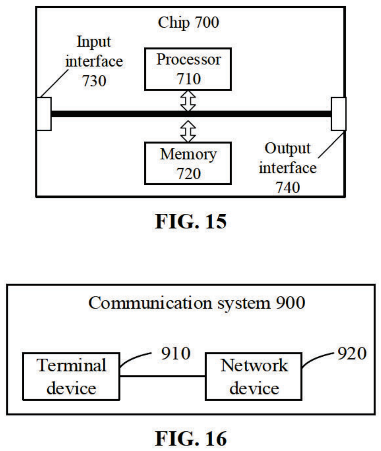

[**0394]** FIG. 15 is a schematic structural diagram of a chip according to an embodiment of the present disclosure. The chip 700 illustrated in FIG. 15 includes a processor 710. The processor 710 may be configured to call and run a computer program stored in a memory to perform each of the methods according to the embodiments of the present disclosure.

[**0395]** Optionally, as illustrated in FIG. 15, the chip 700 may further include a memory 720. Herein, the processor 710 may be configured to call and run the computer program stored in the memory 720 to perform each of the methods according to the embodiments of the present disclosure.

[**0396]** Herein, the memory 720 may be a separate device independent of the processor 710, or may be integrated into the processor 710.

[**0397]** Optionally, the chip 700 may further include an input interface 730. Herein, the processor 710 may control the input interface 730 to communicate with other devices or chips. Specifically, the input interface 1530 may obtain information or data from other devices or chips.

[**0398]** Optionally, the chip 700 may further include an output interface 740. Herein, the processor 710 may control the output interface 740 to communicate with other devices or chips. Specifically, the output interface 1540 may output information or data to other devices or chips.

[**0399]** Optionally, the chip may be applied to the network device in the embodiments of the present disclosure. The chip may implement the corresponding processes implemented by the network device in each of the methods in the embodiments of the present disclosure. For brevity, details are not elaborated herein again.

[**0400]** Optionally, the chip may be applied to the mobile terminal/terminal device in the embodiments of the present disclosure. The chip may implement the corresponding processes implemented by the mobile terminal/terminal device in each of the methods in the embodiments of the present disclosure. For brevity, details are not elaborated herein again.

[**0401]** It should be understood that, the chip referred to in the embodiments of the present disclosure may also be referred to as a system-level chip, a system chip, a chip system, or a system-on-chip, etc.

[**0402]** FIG. 16 is a schematic block diagram of a communication system 900 according to an embodiment of the present disclosure. As illustrated in FIG. 16, the communication system 900 includes a terminal device 910 and a network device 920.

[**0403]** Herein, the terminal device 910 may be configured to implement the corresponding functions implemented by the terminal device in the foregoing methods. The network device 920 may be configured to implement the corresponding functions implemented by the network device in the foregoing methods. For brevity, details are not elaborated herein again.

[**0404]** It is to be understood that the processor of the embodiments of the disclosure may be an integrated circuit chip with signal processing capabilities. In an implementation process, various steps of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor. It may be understood that the memory in the embodiments of the disclosure may be a volatile memory or a non-volatile memory, or may include a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM).

[**0405]** It is to be noted that the memory of the systems and methods described in this specification includes but is not limited to these and any other proper types of memories.

[**0406]** It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

[**0407]** An embodiment of the present disclosure further provides a computer-readable storage medium configured to store a computer program.

[**0408]** Optionally, the computer-readable storage medium may be applied to the network device in the embodiments of the present disclosure, and the computer program causes a computer to perform the corresponding processes performed by the network device in various methods of the embodiments of the present disclosure. For brevity, details are not elaborated herein again.

[**0409]** Optionally, the computer-readable storage medium may be applied to the mobile terminal/terminal device in the embodiments of the present disclosure, and the computer program causes a computer to perform the corresponding processes performed by the mobile terminal/terminal device in various methods of the embodiments of the present disclosure. For brevity, details are not described herein again.

[**0410]** An embodiment of the present disclosure further provides a computer program product, which includes computer program instructions.

[**0411]** Optionally, the computer program product may be applied to the network device in the embodiments of the present disclosure, and the computer program instructions cause a computer to perform the corresponding processes performed by the network device in various methods of the embodiments of the present disclosure. For brevity, details are not elaborated herein again.

[**0412]** Optionally, the computer program product may be applied to the mobile terminal/terminal device in the embodiments of the present disclosure, and the computer program instructions cause a computer to perform the corresponding processes performed by the mobile terminal/terminal device in various methods of the embodiments of the present disclosure. For brevity, details are not described herein again.

[**0413]** An embodiment of the present disclosure further provides a computer program.

[**0414]** Optionally, the computer program may be applied to the network device in the embodiments of the present disclosure, and the computer program, when running on a computer, causes the computer to perform the corresponding processes performed by the network device in various methods of the embodiments of the present disclosure. For brevity, details are not elaborated herein again.

[**0415]** Optionally, the computer program may be applied to the mobile terminal/terminal device in the embodiments of the present disclosure, and the computer program, when running on a computer, causes the computer to perform the corresponding processes performed by the mobile terminal/terminal device in various methods of the embodiments of the present disclosure. For brevity, details are not described herein again.

[**0416]** Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical schemes. Professionals may implement the described functions for each specific application by using different methods, but such implementations shall not be regarded as outside the scope of the present disclosure.

[**0417]** It may be clearly understood by those skilled in the art that, for the specific working processes of the aforementioned systems, apparatuses and units, reference may be made to the corresponding processes in the aforementioned method embodiments, and such specific working processes of the systems, devices and units are not described herein again for the purpose of convenient and brief description

[**0418]** In the several embodiments provided in the disclosure, it is to be understood that the disclosed system, apparatus, and methods may be implemented in other modes. For example, the apparatus embodiments described above are only schematic, and for example, division of the units is only logic fimction division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the apparatuses or units may be implemented in electronic, mechanical, or other forms.

[**0419]** The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments.

[**0420]** In addition, functional units in various embodiments of the disclosure may be integrated into one processing unit, or each of the units may be physically separated, or two or more units may be integrated into one unit.

[**0421]** When the functions are realized in a form of software fimctional units and sold or used as an independent product, they may be stored in a computer-readable storage medium. With respective to this understanding, the technical schemes of the embodiments of the disclosure essentially or the parts that contribute to the prior art, or part of the technical schemes can be embodied in the form of a software product. The computer software product is stored in a storage medium, including multiple instructions for causing a computer device (which may be a personal computer, a server, or a network device, and the like) to execute all or part of the steps of the method described in the embodiments of the disclosure. The foregoing storage medium includes a USB flash disk, a mobile hard disk drive, an ROM, an RAM, and various media that can store program codes, such as a magnetic disk or an optical disk.

[**0422]** The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for wireless communication, comprising:
sending, by a terminal device, at least one first information to a network device, wherein the first information is parameter information related to a model function for positioning supported by the terminal device; and
receiving, by the terminal device, first configuration information sent by the network device, wherein the first configuration information comprises: configuration information related to a model function for positioning and/or configuration information related to a model for positioning.

2. The method of claim 1, wherein the first information comprises at least one of following parameters:
a positioning mode, model input-related information, model output-related information, reference signal-related information, model complexity information, computational complexity information of a model, or Timing Error Group (TEG) information of the terminal device.

3. The method of claim 2, wherein the positioning mode is a direct positioning model or an assisted positioning model.

4. The method of claim 2 or 3, wherein the model input-related information comprises at least one of:
a dimension of a model input parameter, or a type of the model input parameter.

5. The method of any one of claims 2 to 4, wherein the model output-related information comprises location information of the terminal device.

6. The method of any one of claims 2 to 4, wherein the model output-related information comprises at least one of:
Time of Arrival (TOA) information of a reference signal for positioning, Angle of Departure (AoD) information of the reference signal for positioning, Angle of Arrival (AoA) information of the reference signal for positioning, or positioning scenario information.

7. The method of any one of claims 2 to 6, wherein the reference signal-related information comprises Positioning Reference Signal (PRS)-related information and/or Sounding Reference Signal (SRS)-related information.

8. The method of claim 7, wherein the PRS-related information comprises:
PRS processing capability-related information, and/or PRS resource-related information.

9. The method of claim 8, wherein the PRS processing capability-related information comprises at least one of:
a maximum PRS bandwidth supported by the terminal device, a maximum number of positioning frequency layers supported by the terminal device, or a maximum number of PRS resources that the terminal device is able to process in one slot.

10. The method of claim 8 or 9, wherein the PRS resource-related information comprises at least one of:
a maximum number of PRS resource sets for each transmission/reception point (TRP) in each positioning frequency layer, a maximum total number of TRPs across all frequency points, a maximum number of positioning frequency layers supported by the terminal device, a maximum number of PRS resources in each PRS resource set, or a maximum number of PRS resources in each positioning frequency layer.

11. The method of any one of claims 7 to 10, wherein the SRS-related information comprises at least one of:
SRS processing capability-related information, type information for a pathloss reference signal of SRS, or type information of a reference signal for spatial relation information for SRS.

12. The method of claim 11, wherein the SRS processing capability-related information comprises at least one of:
a maximum number of SRS resource sets for positioning in each Bandwidth Part (BWP), a maximum number of SRS resources for positioning in each BWP, a maximum number of aperiodic SRS resources for positioning in each BWP, a maximum number of periodic SRS resources for positioning in each BWP, or a maximum number of semi-persistent SRS resources for positioning in each BWP.

13. The method of claim 11 or 12, wherein the type information for the pathloss reference signal of SRS comprises at least one of:
whether a PRS from a serving cell is supported as the pathloss reference signal of SRS, whether a Channel State Information Reference Signal (CSI-RS) from the serving cell is supported as the pathloss reference signal of SRS, whether a Synchronization Signal Block (SSB) signal from a neighbouring cell is supported as the pathloss reference signal of SRS, or whether a PRS signal from the neighbouring cell is supported as the pathloss reference signal of SRS.

14. The method of any one of claims 11 to 13, wherein the type information of the reference signal for spatial relation information for SRS comprises at least one of:
whether a PRS from a serving cell is supported as the reference signal for spatial relation information for SRS, whether a Channel State Information Reference Signal (CSI-RS) from the serving cell is supported as the reference signal for spatial relation information for SRS, whether a Synchronization Signal Block (SSB) from a neighbouring cell is supported as the reference signal for spatial relation information for SRS, or whether a PRS from the neighbouring cell is supported as the reference signal for spatial relation information for SRS, or whether a SRS for positioning in a working band is supported as the reference signal for spatial relation information for SRS.

15. The method of any one of claims 2 to 14, wherein the model complexity information indicates a target parameter number range, and the target parameter munber range is a range to which a number of parameters comprised in a model belongs.

16. The method of claim 15, wherein the target parameter number range is one of a plurality of parameter number ranges, and the plurality of parameter number ranges are configured by the network device or predefined.

17. The method of any one of claims 2 to 16, wherein the computational complexity information of the model indicates a target computational complexity range, and the target computational complexity range is a range to which a computational complexity of a model belongs.

18. The method of claim 17, wherein the target computational complexity range is one of a plurality of computational complexity ranges, and the plurality of computational complexity ranges are configured by the network device or predefined.

19. The method of any one of claims 2 to 18, wherein the TEG information of the terminal device comprises at least one of:
a maximum number of receive TEGs of the terminal device, a maximum number of transmit TEGs of the terminal device, or a maximum number of receive-transmit TEGs of the terminal device.

20. The method of any one of claims 1 to 19, wherein each of the at least one first information corresponds to one model function, and the first information corresponding to respective model functions comprise different parameter sets and/or different contents of parameters.

21. The method of claim 20, wherein each model function corresponds to P models, where P is a positive integer.

22. The method of claim 21, wherein respective models of the P models correspond to different parameter sets and/or different contents of parameters.

23. The method of claim 21 or 22, wherein a parameter set corresponding to each model comprises at least one of:
reference signal configuration information, model complexity information, computational complexity information of a model, TEG information of the terminal device, timing error information of the terminal device, synchronization error information of the network device, or application scenario.

24. The method of any one of claims 1 to 23, wherein the first information comprises first indication information, and the first indication information indicates a model function corresponding to the first information.

25. The method of any one of claims 1 to 24, wherein the first configuration information comprises second indication information, and the second indication information indicates a target model function configured by the network device for the terminal device.

26. The method of claim 25, wherein in a case where the first information comprises indication information of the model function, the first configuration information comprises the second indication information.

27. The method of any one of claims 1 to 23, wherein the first configuration information comprises:
third indication information for indicating a target model configured by the network device for the terminal device; and
fourth indication information for indicating parameter information corresponding to the target model.

28. The method of claim 27, wherein the parameter information corresponding to the target model is determined according to the first information.

29. The method of claim 27 or 28, wherein in a case where the first information comprises no indication information of the model function, the first configuration information comprises the third indication information and the fourth indication information.

30. The method of any one of claims 1 to 29, wherein each of the at least one first information is carried in a respective independent structure, or the at least one first information is carried in one structure.

31. A method for wireless communication, comprising:
receiving, by a network device, at least one first information sent by a terminal device, wherein the first information is parameter information related to a model function for positioning supported by the terminal device; and
sending, by the network device, first configuration information to the terminal device, wherein the first configuration information comprises: configuration information related to a model function for positioning and/or configuration information related to a model for positioning, and the first configuration information is determined according to the at least one first information.

32. The method of claim 31, wherein the first information comprises at least one of following parameters:
a positioning mode, model input-related information, model output-related information, reference signal-related information, model complexity information, computational complexity information of a model, or Timing Error Group (TEG) information of the terminal device.

33. The method of claim 32, wherein the positioning mode is direct positioning or assisted positioning.

34. The method of claim 32 or 33, wherein the model input-related information comprises at least one of:
a dimension of a model input parameter, or a type of the model input parameter.

35. The method of any one of claims 32 to 34, wherein the model output-related information comprises location information of the terminal device.

36. The method of any one of claims 32 to 34, wherein the model output-related information comprises at least one of:
Time of Arrival (TOA) information of a reference signal for positioning, Angle of Departure (AoD) information of the reference signal for positioning, Angle of Arrival (AoA) information of the reference signal for positioning, or positioning scenario information.

37. The method of any one of claims 32 to 36, wherein the reference signal-related information comprises Positioning Reference Signal (PRS)-related information and/or Sounding Reference Signal (SRS)-related information.

38. The method of claim 37, wherein the PRS-related information comprises:
PRS processing capability-related information, and/or PRS resource-related information.

39. The method of claim 38, wherein the PRS processing capability-related information comprises at least one of:
a maximum PRS bandwidth supported by the terminal device, a maximum number of positioning frequency layers supported by the terminal device, or a maximum number of PRS resources that the terminal device is able to process in one slot.

40. The method of claim 38 or 39, wherein the PRS resource-related information comprises at least one of: a maximum number of PRS resource sets for each transmission/reception point (TRP) in each positioning frequency layer, a maximum total number of TRPs across all frequency points, a maximum number of positioning frequency layers supported by the terminal device, a maximum number of PRS resources in each PRS resource set, or a maximum number of PRS resources in each positioning frequency layer.

41. The method of any one of claims 37 to 40, wherein the SRS-related information comprises at least one of: SRS processing capability-related information, type information for a pathloss reference signal of SRS, or type information of a reference signal for spatial relation information for SRS.

42. The method of claim 41, wherein the SRS processing capability-related information comprises at least one of: a maximum number of SRS resource sets for positioning in each Bandwidth Part (BWP), a maximum number of SRS resources for positioning in each BWP, a maximum number of aperiodic SRS resources for positioning in each BWP, a maximum number of periodic SRS resources for positioning in each BWP, or a maximum number of semi-persistent SRS resources for positioning in each BWP.

43. The method of claim 41 or 42, wherein the type information of the pathloss reference signal of SRS comprises at least one of:
whether a PRS from a serving cell is supported as the pathloss reference signal of SRS, whether a Channel State Information Reference Signal (CSI-RS) from the serving cell is supported as the pathloss reference signal of SRS, whether a Synchronization Signal Block (SSB) from a neighbouring cell is supported as the pathloss reference signal of SRS, or whether a PRS from the neighbouring cell is supported as the pathloss reference signal of SRS.

44. The method of any one of claims 41 to 43, wherein the type information of the reference signal for spatial relation information for SRS comprises at least one of:
whether a PRS from a serving cell is supported as the reference signal for spatial relation information for SRS, whether a Channel State Information Reference Signal (CSI-RS) from the serving cell is supported as the reference signal for spatial relation information for SRS, whether a Synchronization Signal Block (SSB) from a neighbouring cell is supported as the reference signal for spatial relation information for SRS, or whether a PRS from the neighbouring cell is supported as the reference signal for spatial relation information for SRS, or whether SRS for positioning in a working band is supported as the reference signal for spatial relation information for SRS .

45. The method of any one of claims 32 to 44, wherein the model complexity information indicates a target parameter number range, and the target parameter number range is a range to which a number of parameters comprised in a model belongs.

46. The method of claim 45, wherein the target parameter number range is one of a plurality of parameter number ranges, and the plurality of parameter number ranges are configured by the network device or predefined.

47. The method of any one of claims 32 to 46, wherein the computational complexity information of the model indicates a target computational complexity range, and the target computational complexity range is a range to which a computational complexity of a model belongs.

48. The method of claim 47, wherein the target computational complexity range is one of a plurality of computational complexity ranges, and the plurality of computational complexity ranges are configured by the network device or predefined.

49. The method of any one of claims 32 to 48, wherein the TEG information of the terminal device comprises at least one of:
a maximum number of receive TEGs of the terminal device, a maximum number of transmit TEGs of the terminal device, or a maximum number of receive-transmit TEGs of the terminal device.

50. The method of any one of claims 31 to 49, wherein each of the at least one first information corresponds to one model function, and the first information corresponding to respective model functions comprise different parameter sets and/or different contents of parameters.

51. The method of claim 50, wherein each model function corresponds to P models, where P is a positive integer.

52. The method of claim 51, wherein respective models of the P models correspond to different parameter sets and/or different contents of parameters.

53. The method of claim 51 or 52, wherein a parameter set corresponding to each model comprises at least one of:
reference signal configuration information, model complexity information, computational complexity information of a model, TEG information of the terminal device, timing error information of the terminal device, synchronization error information of the network device, or application scenario.

54. The method of any one of claims 31 to 53, wherein the first information comprises first indication information, and the first indication information indicates a model function corresponding to the first information.

55. The method of any one of claims 31 to 54, wherein the first configuration information comprises second indication information, and the second indication information indicates a target model function configured by the network device for the terminal device.

56. The method of claim 55, wherein in a case where the first information comprises indication information of the model function, the first configuration information comprises the second indication information.

57. The method of any one of claims 31 to 53, wherein the first configuration information comprises:
third indication information for indicating a target model configured by the network device for the terminal device; and
fourth indication information for indicating parameter information corresponding to the target model.

58. The method of claim 57, wherein the parameter information corresponding to the target model is determined according to the first information.

59. The method of claim 57 or 58, wherein in a case where the first information comprises no indication information of the model function, the first configuration information comprises the third indication information and the fourth indication imformation.

60. The method of any one of claims 31 to 59, wherein each of the at least one first information is carried in a respective independent structure, or the at least one first information is carried in one structure.

61. A terminal device, comprising:
a communication unit configured to: send at least one first information to a network device, wherein the first information is parameter information related to a model function for positioning supported by the terminal device; and
receive first configuration information sent by the network device, wherein the first configuration information comprises: configuration information related to a model function for positioning and/or configuration information related to a model for positioning.

62. A network device, comprising:
a communication unit configured to: receive at least one first information sent by a terminal device, wherein the first information is parameter information related to a model function for positioning supported by the terminal device; and
send first configuration information to the terminal device, wherein the first configuration information comprises: configuration information related to a model function for positioning and/or configuration information related to a model for positioning, and the first configuration information is determined according to the at least one first information.

63. A terminal device comprising: a processor and a memory, wherein the memory is configured to store a computer program and the processor is configured to invoke and execute the computer program stored in the memory, to perform the method of any one of claims 1 to 30.

64. A network device comprising: a processor and a memory, wherein the memory is configured to store a computer program and the processor is configured to invoke and execute the computer program stored in the memory, to perform the method of any one of claims 31 to 60.

65. A chip comprising: a processor configured to invoke and execute a computer program from a memory, to cause a device on which the chip is mounted to perform the method of any one of claims 1 to 30, or the method of any one of claims 31 to 60.

66. A computer storage medium configured to store a computer program, wherein the computer program causes a computer to perform the method of any one of claims 1 to 30, or the method of any one of claims 31 to 60.

67. A computer program product comprising computer program instructions, wherein the computer program instructions cause a computer to perform the method of any one of claims 1 to 30, or the method of any one of claims 31 to 60.

68. A computer program that causes a computer to perform the method of any one of claims 1 to 30, or the method of any one of claims 31 to 60.
